(19) **Europäisches Patentamt / European Patent Office / Office européen des brevets**

(11) **EP 3 741 518 B1**

(12) # EUROPÄISCHE PATENTSCHRIFT

(45) Veröffentlichungstag und Bekanntmachung des Hinweises auf die Patenterteilung:
**21.09.2022   Patentblatt 2022/38**

(21) Anmeldenummer: **20173409.2**

(22) Anmeldetag: **07.05.2020**

(51) Internationale Patentklassifikation (IPC):
**B25J 9/16** (2006.01)     **G06N 20/00** (2019.01)
**G06N 3/08** (2006.01)     **G06N 3/00** (2006.01)
**G06N 3/04** (2006.01)

(52) Gemeinsame Patentklassifikation (CPC):
**G06N 3/08; B25J 9/161; B25J 9/163; G06N 3/008; G06N 3/0454;** G05B 2219/39298

(54) **VERFAHREN UND VORRICHTUNG FÜR EINE AUTOMATISIERTE BEEINFLUSSUNG EINES AKTUATORS**

METHOD AND DEVICE FOR AUTOMATICALLY INFLUENCING AN ACTUATOR

PROCÉDÉ ET DISPOSITIF PERMETTANT D'INFLUENCER AUTOMATIQUEMENT UN ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2019   DE 102019207410**

(43) Veröffentlichungstag der Anmeldung:
**25.11.2020   Patentblatt 2020/48**

(73) Patentinhaber: **Robert Bosch GmbH**
**70442 Stuttgart (DE)**

(72) Erfinder:
• **Hoppe, Sabrina**
**71229 Leonberg (DE)**
• **Lou, Zhongyu**
**71272 Renningen (DE)**

(56) Entgegenhaltungen:
**US-A1- 2017 228 662     US-A1- 2019 137 954
US-B1- 10 207 408**

• **Ziyu Wang ET AL: "Dueling Network Architectures for Deep Reinforcement Learning", , 5. April 2016 (2016-04-05), XP055344793, Gefunden im Internet: URL:https://arxiv.org/pdf/1511.06581v3.pdf [gefunden am 2017-02-13]**

**Beschreibung**

Stand der Technik

Die Erfindung geht aus von einem computerimplementierten Verfahren und einer Vorrichtung für eine automatisierte Beeinflussung eines Aktuators, insbesondere mittels Reinforcement Lernen.

Aus US 2017/228662 A1 sind Verfahren, Systeme und Vorrichtungen, einschließlich auf einem Computerspeichermedium kodierter Computerprogramme, zum Berechnen von Q-Werten für Aktionen, die von einem mit einer Umgebung interagierenden Agenten aus einem kontinuierlichen Aktionsraum von Aktionen durchzuführen sind, bekannt.

Ziyu Wang et al: "Dueling Network Architectures for Deep Reinforcement Learning", , 5. April 2016 (2016-04-05), XP055344793, online abrufbar: https://arxiv.org/pdf/ 1511.06581 v3.pdf präsentieren eine neuronale Netzarchitektur für modellfreies Reinforcement Learning.

Aus US 2019/137954 A1 ist ein Verfahren bekannt, das von einem Robotersystem ausgeführt wird, um einen Positionssuchprozess bei einer Montageaufgabe durchzuführen.

Aus US 10 207 408 B1 ist eine Methode zur Minimierung einer Kollisionsrate eines Roboters bekannt.

Modell-freies Reinforcement Lernen ermöglicht, dass Agenten eine Aufgabe ohne Vorwissen lernen. Bei Modellfreiem Reinforcement Lernen wird zunächst für eine Exploration vorausgesetzt, dass ein Ziel der Aufgabe bekannt ist. Jedoch ist ein Weg, d.h. die nötigen Aktionen um das Ziel zu erreichen unbekannt. Anschließend lernt ein Agent das Ziel zu erreichen. Um herkömmliches Modellfreies Reinforcement Lernen zur Beeinflussung eines Aktuators beispielsweise in der Robotik zu übertragen, sind Millionen von Beispielen nötig, bis der Roboter das Ziel der Aufgabe herausgefunden hat.

Eine Möglichkeit, diese aufwändige Exploration zu umgehen ist ein Lernen von Demonstrationen. Beim Lernen von Demonstrationen führen menschliche Experten die Aufgabe, d.h. eine Aktionsabfolge, die zum Ziel führt, vor. Anschließend lernt der Agent das Ziel auch von neuen Startpositionen aus zu erreichen.

Die Ressourcen dafür, d.h. beispielsweise Zeit, Kosten, Demonstration oder Überwachung durch Menschen, stehen aber typischerweise selten zur Verfügung.

Wünschenswert ist es daher, die Beeinflussung eines Aktuators mittels Reinforcement Lernen weiter zu verbessern.

Offenbarung der Erfindung

Dies wird durch den Gegenstand der unabhängigen Ansprüche erreicht.

Ein Verfahren für eine automatisierte Beeinflussung eines Aktuators, insbesondere eines Roboters, einer Maschine, eines zumindest teilweise autonomen Fahrzeugs, eines Werkzeugs oder eines Teils davon, sieht vor, dass wenigstens ein Zustand des Aktuators oder einer Umgebung des Aktuators durch eine Explorations-Strategie zum Erlernen einer Policy bereitgestellt wird, wobei eine Aktion für die automatisierte Beeinflussung des Aktuators abhängig vom Zustand durch die Policy definiert ist, wobei ein State-Value als ein Erwartungswert für eine Summe von Belohnungen definiert ist, die bei Befolgen der Policy ausgehend vom Zustand erreicht werden, wobei ein State-Action-Value als ein Erwartungswert für eine Summe von Belohnungen definiert ist, die erreicht werden, wenn im Zustand zunächst eine beliebige Aktion ausgeführt wird und anschließend die Policy ausgeführt wird, wobei ein Advantage abhängig von einer Differenz zwischen dem State-Value und dem State-Action-Value definiert ist, wobei abhängig von der Aktion und dem Zustand eine Vielzahl Advantages durch eine Vielzahl voneinander unabhängiger künstlicher neuronaler Netzwerke definiert ist, wobei die Vielzahl voneinander unabhängiger künstlicher neuronaler Netzwerke ausgebildet sind, je ein Advantage der Vielzahl Advantages bereitzustellen, wobei die Policy für den Zustand die Aktion definiert, die einen empirischen Mittelwert über eine Verteilung der Vielzahl Advantages maximiert, wobei die Explorations-Strategie den wenigstens einen Zustand vorgibt, der einen upper confidence bound lokal maximiert, wobei der upper confidence bound abhängig von einem empirischen Mittelwert und einer Varianz über der Verteilung der Vielzahl Advantages definiert ist. Die Advantages werden durch künstliche neuronale Netzwerke bestimmt oder approximiert, die abhängig vom State-Value unabhängig von Targets für den State-Value und für den State-Action-Value trainiert sind. Die Aktion, die den upper confidence bound maximiert ist diejenige Aktion in einem momentanen Zustand, in dem die Exploration stattfinden soll, die größte Wahrscheinlichkeit hat einen hohen langfristigen Return zu erreichen. Dadurch wird die für die Exploration im momentanen Zustand (lokal) optimale Aktion ausgeführt.

Vorzugsweise ist vorgesehen, dass für die automatisierte Beeinflussung des Aktuators eine sequentielle Reihe von Wegepunkten bereitgestellt wird, die durch Zustände des Aktuators oder seiner Umgebung definiert sind

In einem Aspekt wird der Aktuator zu einem Wegepunkt hinbewegt, wobei die Aktion für diesen Wegepunkt bestimmt oder ausgeführt wird, wenn der Wegepunkt erreicht ist. Dadurch wird eine für diesen Wegepunkt optimale Aktion a bestimmt und ausgeführt.

In einem Aspekt wird überprüft, ob bei der Bewegung von einem Wegepunkt zu einem nächsten Wegepunkt in der Reihe eine Kollision des Aktuators mit einem Hindernis in der Umgebung des Aktuators auftritt, wobei die Bewegung zum nächsten Wegepunkt abgerochen wird, wenn erkannt wird, dass die Kollision vorliegt, und wobei statt der Bewegung zum nächsten Wegepunkt eine Bewegung auf einen in der Reihen auf den nächsten Wegepunkt, insbesondere unmittelbar folgenden Wegepunkt initiiert wird. Die Exploration wird in einem Aspekt unter der Annahme durchgeführt, dass die Umgebung des Aktuators frei von Hindernissen ist. Sofern dennoch in der Bewegung hin zu einem Wegepunkt eine Kollision auftritt, wird dieser Wegepunkt ausgelassen. Dies verbessert den Ablauf der Exploration und ermöglicht den Einsatz der Methode in Situationen, in denen kein korrektes Umgebungsmodell und/oder Modell für eine Roboter Dynamik vorliegen.

Vorzugsweise wird überprüft, ob bei der Bewegung von einem Wegepunkt zu einem nächsten Wegepunkt in der Reihe, der nächste Wegepunkt erreichbar ist, wobei die Bewegung zum nächsten Wegepunkt abgerochen wird, wenn festgestellt wird, dass der nächste Wegepunkt unerreichbar ist, und wobei statt der Bewegung zum nächsten Wegepunkt eine Bewegung auf einen in der Reihen auf den nächsten Wegepunkt folgenden Wegepunkt initiiert wird. Die Exploration wird in einem Aspekt unter der Annahme durchgeführt, dass jeder Wegepunkt erreichbar ist. Sofern dennoch ein Wegepunkt unerreichbar ist, wird dieser Wegepunkt ausgelassen. Dies verbessert den Ablauf der Exploration und ermöglicht den Einsatz der Methode in Situationen, in denen kein korrektes Umgebungsmodell und/oder Modell für eine Roboter Dynamik vorliegen.

Vorzugsweise wird eine Summe über eine Vielzahl upper confidence bounds bestimmt oder approximiert, wobei für die Reihe von Wegepunkten die Zustände bereitgestellt werden, deren upper confidence bound die Summe maximieren. Dadurch werden die unsichersten Zustände für die Exploration als Wegepunkte bestimmt. Dies ermöglicht ein besonders effizientes Modell-freies Reinforcement Lernen abhängig von einer automatischen modell-basierten Demonstration. Im Trainingsverfahren für Reinforcement Learning ist eine Ansteuerung eines Roboters vorgesehen, wobei die Signale für die Ansteuerung bestimmt und die Zustände durch Ansteuern des Roboters ermittelt werden.

Vorzugsweise ist vorgesehen, dass die Verteilung über die Vielzahl Advantages abhängig von der Aktion und dem Zustand bestimmt wird, wobei der upper confidence bound abhängig vom empirischen Mittelwert und der Varianz über die Verteilung der Vielzahl Advantages bestimmt wird. Beim Modell-freien Reinforcement Lernen wird der upper confidence bound abhängig von Datenpunkten bestimmt, die paarweise Aktion und Zustand einander zuordnen. Beispielsweise wird ein Ensemble von künstlichen neuronalen Netzwerken verwendet, die abhängig von der Aktion und vom Zustand die verschiedenen Advantages bestimmen. Die Aktionen und der Zustände für ein künstliches Neuronales Netzwerk sind beispielsweise im Replay Memory für dieses künstliche neuronale Netzwerk gespeichert. Die Parameter der künstlichen neuronalen Netzwerke sind vorzugsweise mit unterschiedlichen Werten z.B. zufällig initialisiert. Dadurch werden abhängig von der Aktion und vom Zustand von verschiedenen künstlichen neuronalen Netzwerken unterschiedliche Advantages ermittelt.

Vorzugsweise ist vorgesehen, dass ein Target-Advantage für den Advantage und ein Target-State-Value für den State-Value bereitgestellt werden, wobei ein Gradientenabstiegsverfahren ausgeführt wird mit dem abhängig vom Target-Advantage, und dem Advantage wenigstens ein Parameter eines künstlichen neuronalen Netzwerks bestimmt wird, das den Advantage abhängig von der Aktion und vom Zustand bestimmt, und/oder mit dem abhängig vom Target-State-Value und dem State-Value wenigstens ein Parameter eines künstlichen neuronalen Netzwerks bestimmt wird, das den State-Value abhängig vom Zustand bestimmt. Die Daten für das Gradientenabstiegsverfahren sind beispielsweise aus vorhergehenden Ansteuerungen des Aktuators oder Simulationen dieser Ansteuerungen in den Replay Memories gespeichert.

Eine Vorrichtung zur automatisierten Beeinflussung eines Aktuators sieht vor, dass die Vorrichtung einen Prozessor und einen Speicher für eine Vielzahl künstlicher neuronaler Netzwerke umfasst, die ausgebildet sind das Verfahren auszuführen.

Die Vorrichtung umfasst eine Vielzahl künstlicher neuronaler Netzwerke, die ausgebildet sind, je ein Advantage der Vielzahl Advantages bereitzustellen.

Vorzugsweise wurden die Vielzahl voneinander unabhängiger künstlicher neuronaler Netzwerke mit einem computerimplementierten Verfahren zum Trainieren eines künstlichen neuronalen Netzwerks zur Bestimmung eines Advantage in einem Reinforcement Learning trainiert, umfassend ein Bestimmen von digitalen Daten über Zustände, Aktionen und Belohnungen für eine Ansteuerung eines Aktuators abhängig von einem upper confidence bound über eine Verteilung von Advantages, die eine Vielzahl künstlicher neuronaler Netzwerke zur Bestimmung eines Advantage bereitstellt, Speichern der Daten in einer Datenbank, Sammeln von digitalen Daten über Zustände, Aktionen und Belohnungen und von digitalen Daten über Target-Advantages für diese Zustände und Aktionen von der Datenbank, Erzeugen eines Trainingsdatensatzes, der diese Daten umfasst, Trainieren der Vielzahl der künstlichen neuronalen Netzwerke zur Bestimmung des Advantage mit dem Trainingsdatensatz in vorgegebenen Wegepunkten, wobei eine Summe über eine Vielzahl upper confidence bounds bestimmt oder approximiert wird, wobei eine sequentielle Reihe von Wegepunkten bereitgestellt wird, die durch Zustände des Aktuators oder seiner Umgebung definiert sind, wobei in der sequentiellen Reihe unmittelbar aufeinanderfolgende Wegepunkte in einer geraden Linie anfahrbar sind, und wobei für die Reihe von Wegepunkten die Zustände bereitgestellt werden, deren upper confidence bound die Summe maximieren.

Weitere vorteilhafte Ausführungen ergeben sich aus der folgenden Beschreibung und der Zeichnung. In der Zeichnung zeigt

Fig. 1     eine schematische Darstellung eines Reinforcement Learning Systems,
Fig. 2     eine schematische Darstellung eines Agenten für Reinforcement Learning,
Fig. 3     Schritte in einem Verfahren zum Beeinflussen eines Aktuators,
Fig. 4     Schritte in einem Verfahren zum Reinforcement Learning,
Fig. 5     eine schematische Darstellung einer Vorrichtung zum Reinforcement Learning.

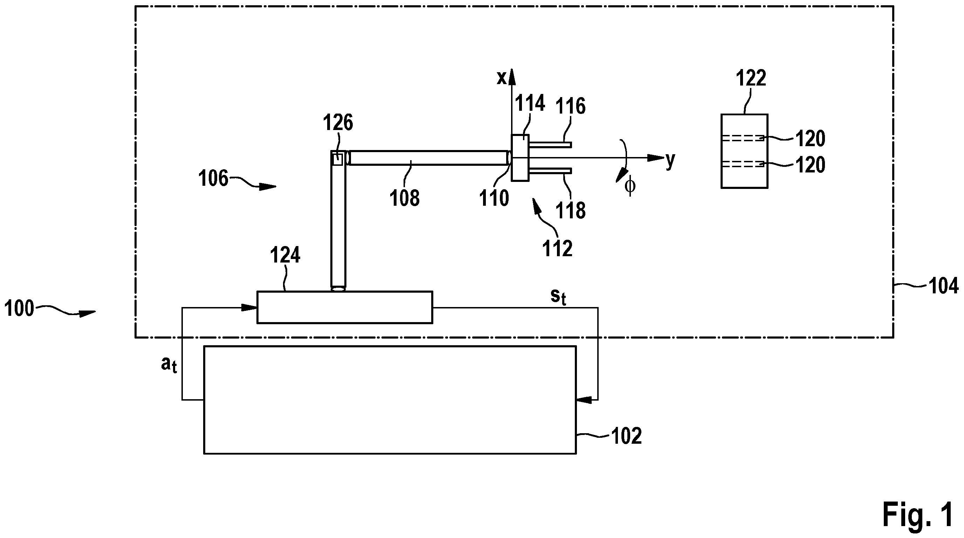

Figur 1 zeigt eine schematische Darstellung eines Reinforcement Learning Systems. Dieses lernende System exploriert mit einer Explorations-Strategie zum Erlernen einer Policy dort, wo in Bezug auf das Reinforcement Learning zwar noch Unsicherheiten bestehen, jedoch auch eine hohe Wahrscheinlichkeit für einen Erfolg. Beispielsweise werden wie im Folgenden beschrieben künstliche neuronale Netzwerke eingesetzt um eine Unsicherheit zu approximieren. Zum Reinforcement Learning wird mit der Explorations-Strategie zunächst in einen besonders unsicheren Zustand navigiert und dort mit einer sogenannten Wegpunkt-Policy die unsicherste Aktion bestimmt und ausgeführt. Die auszuführende Aktion kann zum Ziel haben, eine Manipulationsaufgabe zu lösen oder eine Bewegung eines Roboters zu einem Navigationsziel. Beispielsweise kann ein Staubsaugerroboter vorgesehen sein, dessen Ziel es ist seine Ladestation anzufahren. Der Roboter oder ein Teil davon wird im Folgenden als Aktuator betrachtet. Als Aktuatoren kommen auch Maschinen, Fahrzeuge, Werkzeuge oder Teile davon in Betracht, für die Aktionen bereitgestellt werden. Bereitstellen von Aktionen bedeutet in diesem Kontext das bestimmen der Aktion und/oder das Ausgeben eines Ansteuersignals, das den Aktuator zum Ausführen der Aktion ansteuert, abhängig von der Aktion.

In der folgenden Beschreibung wird anhand der Figur 1 ein System 100 für Reinforcement Lernen mit einem Agenten 102 beschrieben, der mit seiner Umgebung 104 in Zeitschritten t = 1, ..., T interagiert. Die Umgebung 104 umfasst im Beispiel einen Roboter 106, der einen Aktuator 108 umfasst. Der Agent 102 beobachtet zu einem Zeitschritt t einen Zustand $s_t$. Im Beispiel ist eine Menge von n Zuständen S = $\{s_0, s_1,..., s_{n-1}\}$ vorgesehen. Ein Zustand $s_i \in S$ ist im Beispiel durch eine Pose für den Roboter 106 oder den Aktuator 108 nach DIN EN ISO 8373 definiert. Es kann beispielsweise eine Positionsangabe in einer Ebene durch zwei Positionskoordinaten x, y eines kartesischen Koordinatensystems und eine Drehposition des Aktuators mit einem Winkel $\phi$ um die y-Achse bezüglich der Ebene zwischen [$-\frac{\pi}{2}, \frac{\pi}{2}$] vorgesehen sein. Der Ursprung 110 des Koordinatensystems liegt im Beispiel am Ende des Aktuators 108, an dem ein Werkstück 112 angeordnet ist. Das Werkstück 112 umfasst einen Grundkörper 114 einen ersten Stift 116 und einen zweiten Stift 118. Die Stifte erstrecken sich im Beispiel vom Grundkörper 114 mit einem unveränderlichen Winkel von 90° und parallel zueinander in derselben Richtung.

Die Aufgabe, die der Agent 102 im Beispiel lösen soll, ist es, die beiden Stifte in zwei korrespondierende Löcher 120 einer Aufnahme 122 zu stecken.

Der Agent 102 ist ausgebildet, den Roboter 106 zum Zeitschritt t zum Ausführen einer Aktion $a_t$ anzusteuern. Der Roboter 106 umfasst im Beispiel eine Steuereinrichtung 124, die ausgebildet ist, den Aktuator 108 gemäß der Aktion $a_t$ anzusteuern. Im Beispiel definiert die Aktion $a_t$ die x und y Koordinaten einer Soll-Position des Werkstücks 112 und den Winkel $\phi$ einer Soll-Orientierung des Werkstücks 112. Die Steuereinrichtung 124 ist ausgebildet, den Aktuator 108 derart zu bewegen, dass das Werkstück 112 mit der Soll-Orientierung in die Soll-Position bewegt wird. Die Steuereinrichtung 124 ist ausgebildet, den Aktuator 108 gemäß der im Folgenden beschriebenen Explorations-Strategie und/oder Policy zu bewegen. Der Roboter 106 kann einen Sensor 126 umfassen, der ausgebildet ist, eine Kollision des Roboters 106 mit einem Hindernis zu überwachen. Der Sensor 126 ist im Beispiel ausgebildet, ein Moment, das auf den Aktuator 108 wirkt zu messen. Die Steuereinrichtung 124 ist ausgebildet, die Bewegung abzubrechen, wenn eine Kollision erkannt wird. Die Steuereinrichtung 124 ist im Beispiel dazu ausgebildet, die Kollision zu erkennen, wenn das Moment einen Schwellwert überschreitet. Der Aktuator 108 ist im Beispiel ein Roboterarm, der ausgebildet ist, das Werkstück 112 gemäß der Aktion $a_t$ in der Ebene in die durch die x und y Koordinaten vorgegebene Position zu bewegen und in eine durch den Winkel $\phi$ vorgegebene Orientierung zu drehen. Der Zustand $s_t$ ist im Beispiel durch die x und y Koordinaten einer Ist-Position des Werkstücks 112 und den Winkel $\phi$ einer Ist-Orientierung des Werkstücks 112 definiert. Die Ist-Position und die Ist-Orientierung werden von der Steuereinrichtung 124 abhängig von der Stellung des Roboterarms bestimmt. Die Werte sowohl der Aktion $a_t$ als auch des Zustands $s_t$ sind im Beispiel auf einen Wertebereich zwischen -1 und 1 normiert.

Im Beispiel ist eine Menge von m Aktionen $\mathbb{A} = \{a_0, a_1,..., a_{m-1}\}$ vorgesehen. Der Agent 102 ist ausgebildet, die Aktion $a_t$ im Zeitschritt t abhängig von dem Zustand $s_t$ zu bestimmen, der im Zeitschritt t beobachtet wird. Der Agent 102 ist ausgebildet, die Aktion $a_t$ abhängig von der Policy $\pi(s_t)$ zu bestimmen, die dem Zustand $s_t$ die Aktion $a_t$ zuordnet.

Eine Trajektorie $\tau_\pi = \{s_0, a_0, s_1, a_1, ..., s_T\}$ definiert eine Reihe von Zuständen $s_t$ und Aktionen $a_t$ für $t = 1, ..., T$, die für T Zeitschritte t durch die Policy $\pi(s_t)$ definiert ist. Entlang der Trajektorie $\tau_\pi$ sind für die Zeitschritte t Belohnungen $r_t$ definiert, die durch das Ausführen der Aktion $a_t$ im Zeitschritt t erreicht werden. Die Summe aller Belohnungen, die entlang der Trajektorie $\tau_\pi$ erhalten werden, definiert den Return $R_t^\tau = \sum_{i=t}^{T} \gamma^{i-t} r_i$, wobei $y \in (0,1]$ einen Discount-Faktor darstellt.

Ein State-Value $V^\pi(s_t) = \mathbb{E}[R_t^\tau]$ des Zustands $s_t$ ist durch den zu erwartenden zukünftigen Return definiert, der sich einstellt, wenn die Policy $\pi(s_t)$ ausgeführt wird. Eine zu erwartender zukünftiger Return für das Ausführen einer beliebigen Aktion $a_t$ und anschließendes Ausführen der Policy $\pi(s_t)$ ist durch den State-Action-Value $Q^\pi(s_t, a_t) = \mathbb{E}[r_t + \gamma R_{t+1}^\tau]$ definiert. Die Differenz zwischen dem zu erwartenden zukünftigen Return, wenn zunächst vom Agenten 102 eine beiliebige Aktion $a_t$ gewählt wird und anschließend die Policy $\pi(s_t)$ ausgeführt wird und dem zu erwartenden zukünftigen Return bei Befolgen der Policy $\pi(s_t)$, definiert einen Advantage $A^\pi(s_t, a_t) = Q^\pi(s_t, a_t) - V^\pi(s_t)$. $\mathbb{E}$ bezeichnet den jeweiligen Erwartungswert.

Das Ziel des Agenten 102 ist es, eine optimale Policy $\pi^*$zu bestimmen, für die der zu erwartende zukünftige Return für jeden Zustand $s_t$ maximal ist.

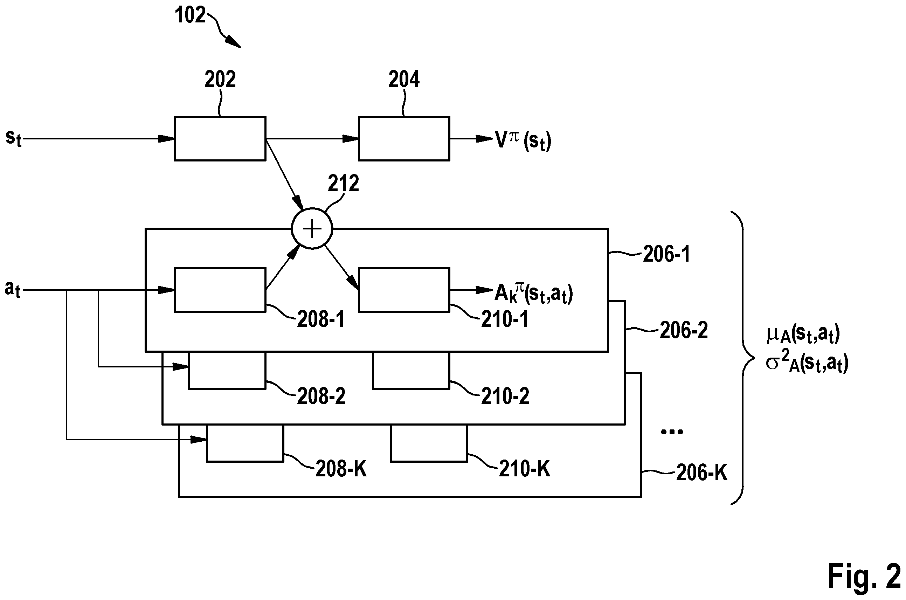

Dies wird im Folgenden anhand der Figur 2 für einen Agenten 102 beschrieben, der auf künstlichen neuronalen Netzwerken basiert. Der Agent 102 umfasst einen Eingang für den Zustand $s_t$ und die Aktion $a_t$. Der Agent 102 umfasst ein künstliches neuronales Netzwerk. Der Agent 102 umfasst ein erstes Multilayer Perceptron 202 mit vier vollständig verbundenen Schichten. Der Eingang des ersten Multilayer Perceptrons 202 ist durch den Zustand $s_t$ definiert. Im Beispiel ist der Eingang durch ein Tripel $x_{s,t}$, $y_{s,t}$, $\phi_{s,t}$ definiert, das die Ist-Position und Ist-Orientierung für den Zustand $s_t$ angibt. Der Agent 102 umfasst ein zweites Multilayer Perceptron 204 mit vier Schichten. Der Eingang des zweiten Multilayer Perceptrons 204 ist durch den Ausgang des ersten Multilayer Perceptrons 202 definiert. Der Ausgang des zweiten Multilayer Perceptrons 204 definiert den State Value $V^\pi(s_t)$. Genauer wird am Ausgang des zweiten Multilayer Perceptrons 204 eine Schätzung des State Values $V^\pi(s_t)$ ausgegeben. Das erste Multilayer Perceptron 202 und das zweite Multilayer Perceptron 204 definieren ein State-Value-Netzwerk. Der Agent 102 umfasst eine Vielzahl K Advantage-Netzwerken 206-1, ..., 206-K. Jedes der Advantage-Netzwerken 206-1, ..., 206-K umfasst ein drittes Multilayer Perceptron 208-1, 208-2, ..., 208-K mit vier Schichten. Jedes der Advantage-Netzwerken 206-1, ..., 206-K umfasst ein viertes Multilayer Perceptron 210-1, 210-2, ..., 210-K mit vier Schichten.

Statt Multilayer Perceptrons können auch andere künstlichen neuronale Netzwerke wie deep convolutional neuronale Netzwerke verwendet werden. Der Aufbau der Multilayer Perceptrons mit vier vollständig verbundenen Schichten kann auch mit einer anderen Anzahl Schichten oder nur unvollständig verbundenen Schichten realisiert sein.

Die Aktion $a_t$ am Eingang des Agenten 102 definiert den Eingang jedes der Advantage-Netzwerke 206-1, ..., 206-K. Genauer definiert die Aktion $a_t$ in jedem der Advantage-Netzwerke 206-1, 206-2, ..., 206-K den Eingang seines dritten künstlichen neuronalen Netzwerks 208-1, 208-2, ..., 208-K. Im Beispiel ist der Eingang durch ein Tripel $x_{a,t}$, $y_{a,t}$, $\phi_{a,t}$ definiert, das die Ist-Position und Ist-Orientierung angibt, in dem die Aktion $a_t$ ausgeführt wird. In jedem Advantage-Netzwerk 206-1, ..., 206-K definieren der Ausgang des ersten künstlichen neuronalen Netzwerks 202 und der Ausgang des dritten künstlichen neuronalen Netzwerks 208-1, 208-2, ..., 208-K in demselben Advantage-Netzwerks 206-1, ..., 206-K den Eingang des viertes künstliches neuronales Netzwerk 210-1, 210-2, ..., 210-K in demselben Advantage-Netzwerken 206-1, ..., 206-K. Im Beispiel werden Elemente am Eingang des viertes künstliches neuronales Netzwerk 210-1, 210-2, ..., 210-K aus Elementen dieser Ausgänge in einer elementweisen Addition 212 bestimmt. Der Ausgang des viertes künstliches neuronales Netzwerks 210-1, 210-2, ..., 210-K definiert für jedes Advantage-Netzwerk 206-1, ..., 206-K seinen Advantage $A_k^\pi(s_t, a_t)$ mit k = 1, ..., K. Genauer wird am Ausgang des vierten künstlichen neuronalen Netzwerks 210-1, 210-2, ..., 210-K eine Schätzung des Advantage $A_k^\pi(s_t, a_t)$ ausgegeben.

Dies bedeutet, es wird ein einzelner State Value $V^\pi(s_t)$ und eine Verteilung mit K Advantages $A_k^\pi(s_t, a_t)$ mit k=1, ..., K vorhergesagt.

Jedes der künstlichen neuronalen Netzwerke enthält im Beispiel vier vollständig verbundene Schichten. Vom Eingang aus betrachtet verwendet jedes der künstlichen neuronalen Netzwerke im Beispiel für die drei ersten Schichten leaky ReLU Aktivierungen und für die letzte Schicht lineare Aktivierungen. Es können auch andere Netzwerkarchitekturen und Aktivierungen vorgesehen sein.

Der Agent 102 ist ausgebildet, für einen bestimmten Zustand $s_t$ eine Aktion a abhängig von einer Policy $\pi(s_t)$

vorzugeben. Die Policy $\pi(s_t)$ ist im Beispiel abhängig von der Verteilung der Advantages $A_k^\pi(s_t, a_t)$ definiert:

$$\pi(s_t) = argmax_{a \in \mathbb{A}} \mu_A(s_t, a)$$

$\mu_A$ wird beispielsweise bestimmt durch

$$\mu_A(s_t, a) = \frac{1}{K} \sum_{k=1}^{K} A_k^\pi(s_t, a)$$

Der Agent 102 ist ausgebildet, den Roboter 106 für eine vorgegebene Anzahl, beispielsweise T=200 Schritte, mit Aktionen $a_t = \pi(s_t)$ anzusteuern, und jedes der Advantage-Netzwerk 206-1, ..., 206-K einzeln und separat abhängig von den Daten $(s_t, a_t, r_t, s_{t+1})_i$ seines separaten Replay Memory zu aktualisieren. Die Daten $(s_t, a_t, r_t, s_{t+1})_i$ werden beispielsweise abhängig vom Index i gesampelt. Der Agent 102 kann ausgebildet sein, die verschiedenen Advantage-Netzwerk 206-1, ..., 206-K mit unterschiedlichen Daten zu trainieren, beispielsweise indem zu Beginn verschiedene Startzustände insbesondere zufällig vorgegeben werden.

Der Agent 102 ist ausgebildet, das State-Value-Netzwerk 204 abhängig von Daten zu aktualisieren, die aus allen Replay Speichern gesampelt werden.

Der Agent 102 ist ausgebildet, die verschiedenen künstlichen neuronalen Netzwerke mit zufälligen Parametern, insbesondere zufälligen Gewichten, zu initialisieren.

Der Agent 102 ist zudem ausgebildet, ein stochastisches Gradentenabstiegsverfahren zum Training aller künstlichen neuronalen Netzwerke anzuwenden. Dazu werden die Schätzungen der künstlichen neuronalen Netzwerke für die Advantages $A_k^\pi(s_t, a_t)$ mit einem iterativ berechneten Target-Advantage $\hat{A}$ und der State Value $V^\pi(s_t)$ mit einem iterativ berechneten Target-State-Value $\hat{V}$ verglichen, die für jedes der k Advantage-Netzwerk 206-1, ..., 206-K aus Daten $(s_t, a_t, r_t, s_{t+1})_i$ bestimmt werden, die in den Replay Memories gespeichert sind. Das Gradentenabstiegsverfahren wird abhängig vom Ergebnis des Vergleichs durchgeführt mit:

$$\hat{V}(s_t) = r_t + \left(1 - \mathbb{1}_{s_{t+1} \text{ is terminal}}\right) \cdot \gamma V^\pi(s_{t+1})$$

$$\hat{A}_k(s_t, a_t) = \hat{Q}_{b,k}(s_t, a_t) - V^\pi(s_t)$$

mit

$$\hat{Q}_k(s_t, a_t) = r_t + \left(1 - \mathbb{1}_{s_{t+1} \text{ is terminal}}\right) \cdot \gamma Q_{\hat{k}}\left(s_{t+1}, \pi(s_{t+1})\right)$$

$$\pi(s_t) = argmax_{a \in \mathbb{A}} \mu_A(s_t, a_t)$$

wobei 1 eine Indikatorfunktion darstellt, die angibt, ob der Zustand $s_{t+1}$ der oder ein Endzustand ist oder nicht. Beispielseise ist durch die Indikatorfunktion 1 dem Endzustand der Wert 1 der Indikatorfunktion zugeordnet. Beispielsweise ist allen anderen Zuständen der Wert 0 zugeordnet.

Für die K Advantages $A_k^\pi(s_t, a_t)$ mit k=1, ..., K ist ein Mittelwert $\mu_A(s_t, a_t)$ definiert. Der Mittelwert $\mu_A$ für den vorgegebenen Eingang $s_t, a_t$ an jedem der Advantage-Netzwerke 206-1, ..., 206-K ist beispielsweise

$$\mu_A(s_t, a_t) = \frac{1}{K} \sum_{k=1}^{K} A_k^\pi(s_t, a_t)$$

Die argmax Funktion für die Berechnung der Policy $\pi(s_t)$ wird im Beispiel durch die Auswertung einer vorgegebenen Anzahl, beispielsweise K=100, gesampelter Aktionen angenähert. Genauer werden Daten mittels ihres Index i im Replay Memory gleichverteilt gesampelten. Im Beispiel geben $\hat{k}$ und k einen Index für Advantage Netzwerke in 1,..., K an. Im Beispiel ist $\hat{k} \neq k$. Im Beispiel ist der Agent 102 ausgebildet, nach jeder Episode der Datensammlung eine vorgegebene Anzahl Iterationen des Gradientenabstiegsverfahren, beispielsweise in 50 Iterationen, durchzuführen, in denen die künstlichen neuronalen Netzwerke trainiert werden. Alternativ kann vorgesehen sein, die optimale Aktion für die Auswertung von $\pi(s_t)$ durch ein separates Gradientenabstiegsverfahren in jedem Schritt durchzuführen. Dadurch ist bei höherem Zeitaufwand eine noch bessere, genauere Optimierung möglich.

Die beschriebene Netzwerkarchitektur umfasst zwei separate Datenströme. Dies reduziert die Varianz im Gradientenabstiegsverfahren. Dadurch wird das Training schneller und stabiler durchführbar.

Die K Advantage-Netzwerk 206-1, ..., 206-K bilden ein Ensemble von künstlichen neuronalen Netzwerken in einem der Datenströme. Dieser Datenstrom stellt eine Näherungsberechnung für eine Modell-Unsicherheit dar. Eine Modell-Unsicherheit besteht insbesondere für Gebiete mit Zuständen, für die noch keine Exploration durchgeführt wurde.

In einem Aspekt ist der Agent 102 ausgebildet, unter der Verwendung einer groben Näherung für eine Dynamik des Aktuators 108 oder des Roboters 106 Trajektorien der Explorations-Strategie zum Erlernen der Policy auszuwählen, die eine Summe der UCB der Advantages A für eine Menge Wegepunkte maximiert. Der Agent 102 ist beispielsweise ausgebildet, die Wegepunkte planvoll zu bestimmen, indem eine Reihe von h Wegepunkten bestimmt werden, die folgende Summe näherungsweise maximieren:

$$\sum_{i=0}^{h} max_a UCB_A(s_i, a)$$

Beispielsweise ist die Reihe der Wegepunkte definiert durch:

$$argmax_{(s_0,...,s_h) \in S^h} \sum_{i=0}^{h} max_a UCB_A(s_i, a)$$

$UCB_A$ wird beispielsweise bestimmt durch

$$UCB_A(s_i, a) = \mu_A(s_i, a) + \kappa\sigma_A^2(s_i, a)$$

mit

$$\mu_A(s_i, a) = \frac{1}{K}\sum_{k=1}^{K} A_k^\pi(s_i, a)$$

$$\sigma_A^2(s_i, a) = \frac{1}{K}\sum_{k=1}^{K} \left(A_k^\pi(s_i, a) - \mu_A(s_i, a)\right)^2$$

Mit $\kappa$ ist ein einstellbarer hyperparameter bezeichnet, der beispielsweise zu $\kappa$ = 1,96 gewählt wird.

Die Wegepunkte werden beispielsweise mit dem Verfahren nach Powell bestimmt: Powell M. J. D. "An efficient method for finding the minimum of a function of several variables without calculating derivatives". The Computer Journal, Volume 7, Issue 2, 1964, Pages 155-162.

Der Agent 102 ist ausgebildet, den Roboter 106 gemäß der ExplorationsStrategie anzusteuern, um die Wegepunkte sequentiell abzufahren. Wenn ein Punkt empirisch unerreichbar ist, beispielsweise wegen eines Hindernisses oder weil eine Annahme über die Dynamik verletzt ist, wird das Anfahren dieses Wegepunktes abgebrochen und dieser Wegepunkt übersprungen. Der Agent 102 ist beispielsweise ausgebildet, die Kollision mit dem Hindernis mittels des Sensors 126 zu erfassten und den Wegepunkt zu überspringen indem die Bewegung zu diesem Wegepunkt hin abgebrochen wird und der in der Sequenz nächste Wegepunkt angefahren wird.

Beispielsweise wird zur Ansteuerung eines Wegepunkts die Annahme getroffen, dass jeder Wegepunkt in einer geraden Linie anfahrbar ist. Der Agent 102 ist in diesem Fall ausgebildet, den nächsten Wegepunkt, d.h. im Beispiel eine nächste Soll-Position des Aktuators 108 in einer geraden Linie von einer momentanen Ist-Position des Aktuators 108 anzusteuern.

Der Aktuator 102 ist ausgebildet, sobald ein Wegepunkt erreicht ist, eine für diesen Wegepunkt optimale Aktion zu bestimmen und auszuführen. Die optimale Aktion wird in einem Aspekt bestimmt durch eine Wegpunkt Policy

$$a = \pi_W(s_i) = arg\,max_a UCB_A(s_i, \mathrm{a}) = argmax_a(\mu_A(s_i, \mathrm{a}) + \kappa\sigma_A^2(s_i, \mathrm{a}))$$

Dadurch werden Daten erzeugt, mit denen insbesondere kontaktreiche Manipulationsaufgaben sehr schnell erlernbar sind. Diese Trajektorien lassen sich als Demonstrationen nutzen, mit denen das Reinforcement Learning beim Lernen schnell zu einer Policy $\pi^*(s_t)$ konvergiert. Dadurch erfolgt die Exploration bevorzugt in Gebieten mit Zuständen für die eine große Unsicherheit, aber auch große Chance auf gute langfristige Returns, bezüglich der Policy $\pi(s_t)$ besteht.

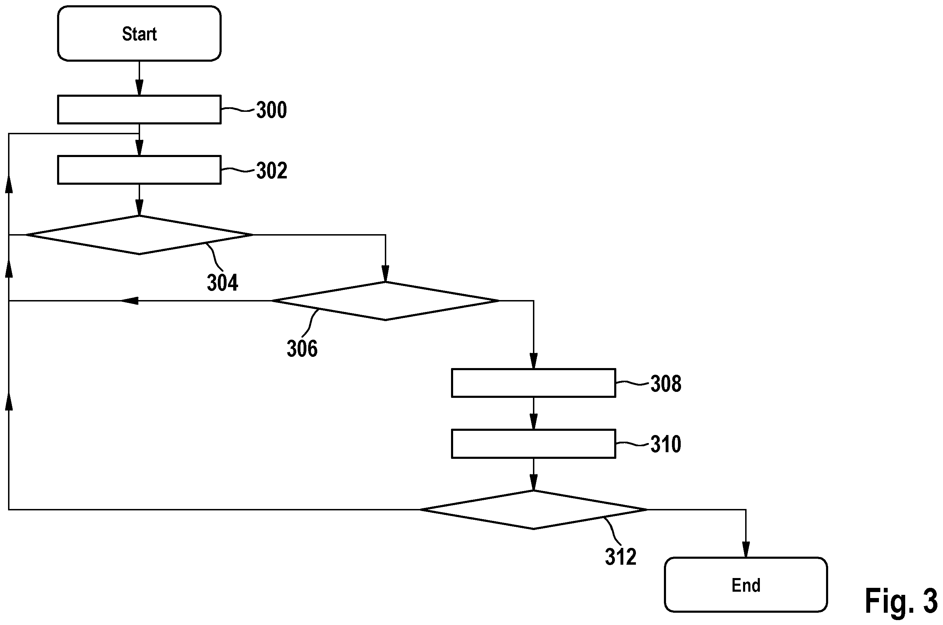

Anhand der Figur 3 wird im Folgenden ein computerimplementiertes Verfahren zur Beeinflussung des Aktuators 108 beschrieben. Der Agent 102 ist zur automatisierten Beeinflussung eines Aktuators 108 mit dem Verfahren ausgebildet.

Nach dem Start des Verfahrens wird ein Schritt 300 ausgeführt.

Im Schritt 300 wird ein Zustand $s_i$ des Aktuators 108 oder einer Umgebung des Aktuators 108 bereitgestellt. Für die automatisierte Beeinflussung des Aktuators 108 wird im Beispiel gemäß der Explorations-Strategie zum Erlernen der Policy eine sequentielle Reihe von Wegepunkten bereitgestellt, die durch Zustände $s_h$ des Aktuators 108 oder seiner Umgebung definiert sind. In der sequentiellen Reihe unmittelbar aufeinanderfolgende Wegepunkte sind im Beispiel in einer geraden Linie anfahrbar.

Beispielsweise wird die folgende Summe über eine Vielzahl der upper confidence bounds bestimmt oder approximiert:

$$\sum_{i=0}^{h} max_a UCB_A(s_i, a)$$

Für die Reihe von Wegepunkten werden die Zustände bereitgestellt, deren upper confidence bound diese Summe maximieren.

In einem Schritt 302 wird der Aktuator 108 zu einem Wegepunkt hinbewegt. Im Beispiel wird der Aktuator 108 vom Agenten zu dem Wegepunkt gesteuert, der in der sequentiellen Reihe von Wegepunkten der nächste anzusteuernde Wegpunkt ist.

In einem anschließenden Schritt 304 wird geprüft, ob bei der Bewegung von einem Wegepunkt zu einem nächsten Wegepunkt in der Reihe eine Kollision des Aktuators 108 mit einem Hindernis in der Umgebung des Aktuators 108 auftritt.

Wenn die eine Kollision vorliegt, wird die Bewegung zum nächsten Wegepunkt abgerochen und der Schritt 302 ausgeführt. Dadurch wird statt der Bewegung zum nächsten Wegepunkt eine Bewegung auf einen in der Reihe auf den nächsten Wegepunkt, insbesondere unmittelbar folgenden Wegepunkt initiiert.

Die Exploration wird grundsätzlich unter der Annahme durchgeführt, dass die Umgebung des Aktuators 108 frei von Hindernissen ist. Sofern dennoch in der Bewegung hin zu einem Wegepunkt eine Kollision auftritt, wird dieser Wegepunkt ausgelassen.

Wenn keine Kollision vorliegt, wird der Schritt 306 ausgeführt.

Im Schritt 306 wird überprüft, ob bei der Bewegung von einem Wegepunkt zu einem nächsten Wegepunkt in der Reihe, der nächste Wegepunkt erreichbar ist. Wenn der nächste Wegepunkt unerreichbar ist, wird die Bewegung zum nächsten Wegepunkt abgerochen und der Schritt 302 ausgeführt. Dadurch wird statt der Bewegung zum nächsten Wegepunkt eine Bewegung auf einen in der Reihe auf den nächsten Wegepunkt folgenden Wegepunkt initiiert. Die Exploration wird grundsätzlich unter der Annahme durchgeführt, dass jeder Wegepunkt erreichbar ist. Sofern dennoch ein Wegepunkt unerreichbar ist, wird dieser Wegepunkt ausgelassen.

Wenn der Wegepunkt erreichbar ist, wird der Schritt 308 ausgeführt.

Die Schritte 304 und 306 sind optional. Der Schritt 308 kann auch direkt nach dem Schritt 302 ausgeführt werden.

Im Schritt 308 wird die Aktion a für die automatisierte Beeinflussung des Aktuators 108 abhängig vom Zustand $s_i$ und abhängig von einer Wegpunkt Policy $\pi_W(s_t)$ bereitgestellt. Der Zustand $s_i$ entspricht dem Wegepunkt, wenn dieser erreicht ist. Der Schritt 308 wird vorzugsweise ausgeführt, wenn der Wegepunkt erreicht ist.

Im Beispiel ist der State-Value $V(s_t)$ abhängig von dem Erwartungswert für Belohnungen $r_t$ definiert, die bei Befolgen der Policy $\pi(s_t)$ ausgehend vom Zustand $s_i$ erreicht werden.

Im Beispiel ist der State-Action-Value $Q^\pi(s_t, a_t)$ abhängig von einem Erwartungswert für Belohnungen $r_t$ definiert, die erreicht werden, wenn im Zustand $s_i$ zunächst eine beliebige Aktion $a_t$ ausgeführt wird und anschließend die Policy $\pi(s_t)$ ausgeführt wird.

Der Advantage $A_k^\pi(s_i, a)$ ist im Beispiel abhängig von einer Differenz zwischen dem State-Value $V(s_t)$ und dem State-Action-Value $Q^\pi(s_t, a_t)$ definiert. Die Policy $\pi(s_t)$ definiert für den Zustand $s_i$ die Aktion a, für die der maximale empirische Mittelwert über eine Vielzahl der Advantages $A_k^\pi(s_i, a)$ vorhergesagt wird: $\pi(s_t) = \arg\max_{a \in A} \mu_A(s_t, a)$

Die Vielzahl Advantages $A_k^\pi(s_i, a)$ ist abhängig von der Aktion a und dem Zustand $s_i$ definiert.

Der upper confidence bound wird abhängig von dem empirischen Mittelwert $\mu_A(s_i, a)$ und einem Faktor $\kappa$ bestimmt, der über der Verteilung der Vielzahl Advantages $A_k^\pi(s_i, a)$ definiert ist. $\kappa$ kann beispielsweise 1.96 betragen.

Die Advantages werden durch künstliche neuronale Netzwerke bestimmt oder approximiert, die abhängig vom State-Value unabhängig von Targets für den State-Value und für den State-Action-Value trainiert sind. Die Aktion, für die der maximale empirische Mittelwert über eine Vielzahl der Advantages $A_k^\pi(s_i, a)$ vorhergesagt wird, ist die unsicherste Aktion in einem momentanen Zustand, in dem die Exploration stattfinden soll. Dadurch wird die für die Exploration im momentanen Zustand optimale Aktion ausgeführt.

Anschließend wird ein Schritt 310 ausgeführt. Im Schritt 310 wird die Aktion a ausgeführt. Dadurch wird eine für diesen Wegepunkt optimale Aktion a bestimmt und ausgeführt.

Anschließend wird in einem Schritt 312 überprüft, ob auf den angesteuerten Wegepunkt ein nächster Wegepunkt in der Reihe definiert ist. Wenn dies der Fall ist, wird der Schritt 302 ausgeführt. Anderenfalls endet das Verfahren.

Es kann vorgesehen sein, zur weiteren Exploration nachdem ein Wegpunkt erreicht und die optimale Aktion ausgeführt wurde, noch eine Anzahl zufälliger Aktionen durchzuführen. Beispielsweise werden weniger als 10, beispielsweise 5 zufällige Aktionen durchgeführt.

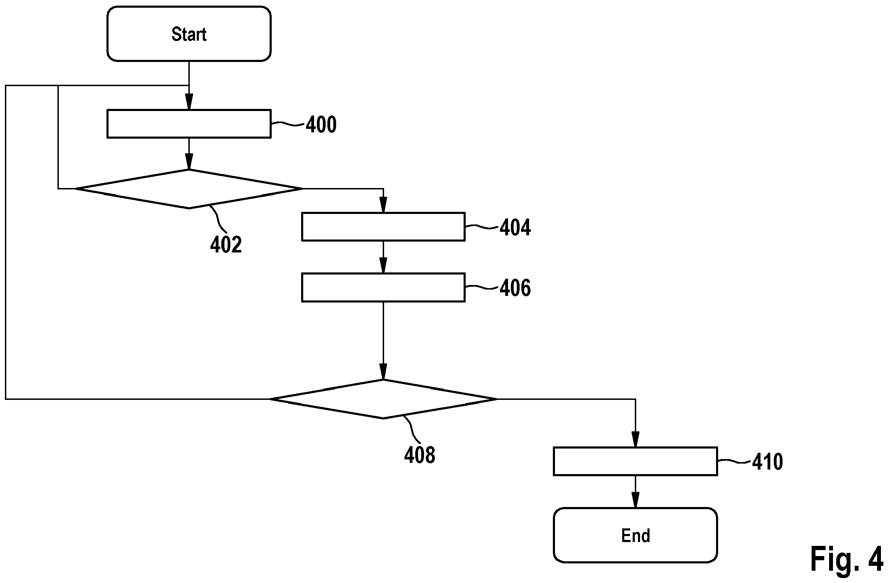

Ein Verfahren zum Reinforcement Learning wird im Folgenden anhand der Figur 4 beschrieben.

Nach dem Start wird ein Schritt 400 ausgeführt.

Im Schritt 400 wird die Verteilung über die Vielzahl Advantages $A_k^\pi(s_i, a)$ abhängig von der Aktion a und dem Zustand $s_i$ bestimmt.

Im Beispiel wird der upper confidence bound abhängig vom empirischen Mittelwert $\mu_A(s_i, a)$ über die Verteilung der Vielzahl Advantages $A_k^\pi(s_i, a)$ bestimmt.

Beispielsweise wird im Schritt 400 die Exploration gemäß dem zuvor anhand der Figur 3 beschriebenen Verfahren mit der Explorations-Strategie zum Erlernen der Policy in mehreren Iterationen ausgeführt.

In einem auf den Schritt 400 folgenden Schritt 402 wird geprüft, ob die Exploration abgeschlossen ist. Falls die Exploration abgeschlossen ist, wird ein Schritt 404 ausgeführt. Anderenfalls wird der Schritt 400 für die nächste Iteration der Exploration ausgeführt.

Im Schritt 404 werden der Target-Advantage $\hat{A}$ für den Advantage $A_k^\pi(s_i, a)$ und der Target-State-Value $\hat{V}$ für den State-Value $V(s_t)$ bereitgestellt.

In einem anschließenden Schritt 406 wird ein Gradientenabstiegsverfahren ausgeführt mit dem abhängig vom Target-Advantage $\hat{A}$, und dem Advantage $A_k^\pi(s_i, a)$ wenigstens ein Parameter eines der künstlichen neuronalen Netzwerke bestimmt wird, das den Advantage $A_k^\pi(s_i, a)$ abhängig von der Aktion a und vom Zustand $s_i$ bestimmt. Alternativ oder zusätzlich wird mit dem Gradientenabstiegsverfahren ausgeführt, mit dem abhängig vom Target-State-Value $\hat{V}$ und dem State-Value $V(s_t)$ wenigstens ein Parameter des künstlichen neuronalen Netzwerks bestimmt wird, das den State-Value $V(s_t)$ abhängig vom Zustand ($s_i$) bestimmt.

Dieses Gradientenabstiegsverfahren wird in mehreren Iterationen ausgeführt. Im Beispiel wird in einem auf den Schritt 406 folgenden Schritt 408 geprüft, ob das Training des Agenten 102 mit dem Gradientenabstiegsverfahren für eine vorgegebene Anzahl Wiederholungen iteriert wurde. Wenn dies der Fall ist, wird der Schritt 410 ausgeführt. Anderenfalls wird der Schritt 400 ausgeführt.

Im Schritt 410 wird der Aktuator 108 mit dem so trainierten Agenten 102 angesteuert. Anschließend endet das Verfahren.

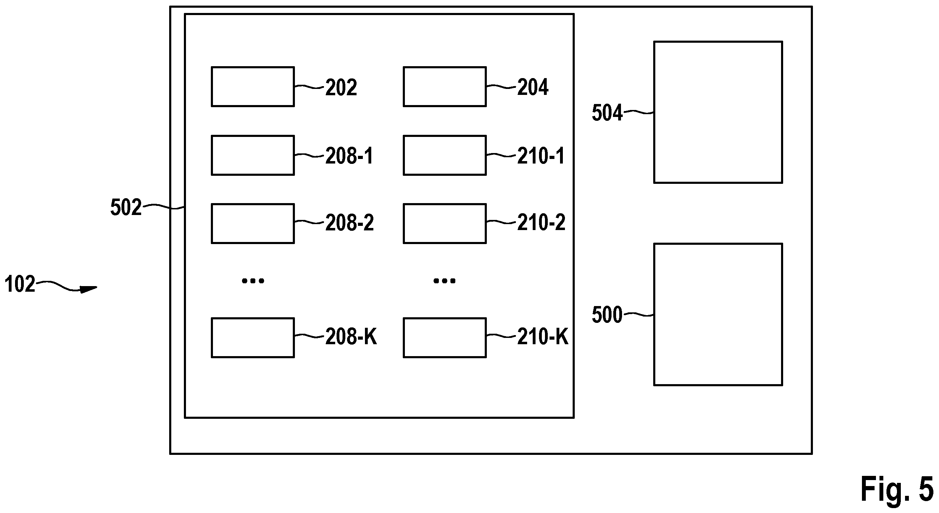

In Figur 5 ist der Aktuator 102 bespielhaft dargestellt. Der Agent 102 umfasst einen Prozessor 500 und einen Speicher 502 für die beschriebenen künstlichen neuronalen Netzwerke. Der Prozessor 500 ist beispielsweise ein Mikroprozessor oder ein Graphical Processing Unit einer Grafikkarte. Es kann eine Vielzahl Prozessoren vorgesehen sein. Der Agent 102 ist ausgebildet das beschriebene Verfahren auszuführen. Genauer umfasst der Aktuator 102 die künstlichen neuronalen Netzwerke 210-1, ..., 210-K, die ausgebildet sind, je ein Advantage $A_k^\pi(s_i, \mathrm{a})$ der Vielzahl Advantages $A_k^\pi(s_i, \mathrm{a})$ bereitzustellen.

Ein Verfahren zum Trainieren eines künstlichen neuronalen Netzwerks zur Bestimmung eines Advantages $A_k^\pi(s_i, \mathrm{a})$ in einem Reinforcement Learning, umfasst beispielsweise die folgenden Schritte

602: Bestimmen von digitalen Daten über Zustände, Aktionen und Belohnungen für eine Ansteuerung des Aktuators 108 abhängig von dem upper confidence bound über die Verteilung von Advantages $A_k^\pi(s_i, \mathrm{a})$ , die eine Vielzahl künstlicher neuronaler Netzwerke zur Bestimmung je eines Advantage $A_k^\pi(s_i, \mathrm{a})$ bereitstellt.

604: Speichern der Daten in einer Datenbank, beispielsweise im Replay Memory des jeweiligen künstlichen neuronalen Netzwerks.

606: Sammeln von digitalen Daten über Zustände, Aktionen und Belohnungen und von digitalen Daten über Target-Advantages ($\hat{A}$) für diese Zustände und Aktionen von der Datenbank. Target-Advantages ($\hat{A}$) werden beispielsweise nach einer Rechenvorschrift bestimmt. Beispielsweise sind die dafür verwendeten künstlichen neuronalen Netzwerke zufällig initialisiert.

608: Erzeugen eines Trainingsdatensatzes, der diese Daten umfasst.

610: Trainieren der Vielzahl der künstlichen neuronalen Netzwerke zur Bestimmung des Advantages $A_k^\pi(s_i, \mathrm{a})$ mit dem Trainingsdatensatz in den vorgegebenen Wegepunkten.

## Patentansprüche

1. Verfahren für eine automatisierte Beeinflussung eines Aktuators (108) insbesondere eines Roboters, einer Maschine, eines zumindest teilweise autonomen Fahrzeugs, eines Werkzeugs oder eines Teils davon, wobei wenigstens ein Zustand des Aktuators (108) oder einer Umgebung des Aktuators (108) durch eine Explorations-Strategie zum Erlernen einer Policy bereitgestellt wird (300), wobei eine Aktion für die automatisierte Beeinflussung des Aktuators (108) abhängig vom Zustand durch die Policy definiert ist (308), wobei ein State-Value als ein Erwartungswert für eine Summe von Belohnungen definiert ist, die bei Befolgen der Policy ausgehend vom Zustand erreicht werden, wobei ein State-Action-Value als ein Erwartungswert für eine Summe von Belohnungen definiert ist, die erreicht werden, wenn im Zustand zunächst eine beliebige Aktion ausgeführt wird und anschließend die Policy ausgeführt wird, wobei ein Advantage abhängig von einer Differenz zwischen dem State-Value und dem State-Action-Value definiert ist, **dadurch gekennzeichnet, dass** abhängig von der Aktion und dem Zustand eine Vielzahl Advantages durch eine Vielzahl voneinander unabhängiger künstlicher neuronaler Netzwerke definiert ist, wobei die Vielzahl voneinander unabhängiger künstlicher neuronaler Netzwerke ausgebildet sind, je ein Advantage der Vielzahl Advantages bereitzustellen, wobei die Policy für den Zustand die Aktion definiert, die einen empirischen Mittelwert über eine Verteilung der Vielzahl Advantages maximiert, wobei die Explorations-Strategie wenigstens einen Zustand vorgibt, der einen upper confidence bound lokal maximiert, wobei der upper confidence bound abhängig von einem empirischen Mittelwert und einer Varianz über der Verteilung der Vielzahl Advantages definiert ist.

2. Verfahren nach Anspruch 1, **dadurch gekennzeichnet, dass** durch die Explorations-Strategie für die automatisierte Beeinflussung des Aktuators (108) eine sequentielle Reihe von Wegepunkten bereitgestellt wird (300), die durch Zustände ($s_h$) des Aktuators (108) oder seiner Umgebung definiert sind.

3. Verfahren nach Anspruch 2, **dadurch gekennzeichnet, dass** der Aktuator (108) zu einem Wegepunkt hinbewegt wird (302), wobei die Aktion (a) für diesen Wegepunkt bestimmt (308) oder ausgeführt wird (310), wenn der Wegepunkt erreicht ist.

4. Verfahren nach Anspruch 2 oder 3, **dadurch gekennzeichnet, dass** überprüft wird (304), ob bei der Bewegung von einem Wegepunkt zu einem nächsten Wegepunkt in der Reihe eine Kollision des Aktuators (108) mit einem Hindernis in der Umgebung des Aktuators (108) auftritt, wobei die Bewegung zum nächsten Wegepunkt abgerochen wird, wenn erkannt wird, dass die Kollision vorliegt, und wobei statt der Bewegung zum nächsten Wegepunkt eine Bewegung auf einen in der Reihen auf den nächsten Wegepunkt, insbesondere unmittelbar folgenden Wegepunkt initiiert wird.

5. Verfahren nach einem der Ansprüche 2 bis 4, **dadurch gekennzeichnet, dass** überprüft wird (306), ob bei der Bewegung von einem Wegepunkt zu einem nächsten Wegepunkt in der Reihe, der nächste Wegepunkt erreichbar ist, wobei die Bewegung zum nächsten Wegepunkt abgerochen wird, wenn festgestellt wird, dass der nächste Wegepunkt unerreichbar ist, und wobei statt der Bewegung zum nächsten Wegepunkt eine Bewegung auf einen in der Reihen auf den nächsten Wegepunkt folgenden Wegepunkt initiiert wird.

6. Verfahren nach einem der Ansprüche 2 bis 5, **dadurch gekennzeichnet, dass** eine Summe über eine Vielzahl upper confidence bounds bestimmt oder approximiert wird (300), wobei für die Reihe von Wegepunkten die Zustände bereitgestellt werden (300), deren upper confidence bound die Summe maximieren.

7. Verfahren nach einem der vorherigen Ansprüche, **dadurch gekennzeichnet, dass** die Verteilung über die Vielzahl Advantages abhängig von der Aktion und dem Zustand bestimmt wird (400), wobei der upper confidence bound abhängig vom empirischen Mittelwert und der Varianz über die Verteilung der Vielzahl Advantages bestimmt wird (400).

8. Verfahren nach Anspruch 7, **dadurch gekennzeichnet, dass** ein Target-Advantage für den Advantage und ein Target-State-Value für den State-Value bereitgestellt werden (404), wobei ein Gradientenabstiegsverfahren ausgeführt wird (406) mit dem abhängig vom Target-Advantage, und dem Advantage wenigstens ein Parameter eines künstlichen neuronalen Netzwerks bestimmt wird, das den Advantage abhängig von der Aktion und vom Zustand bestimmt, und/oder mit dem abhängig vom Target-State-Value und dem State-Value wenigstens ein Parameter eines künstlichen neuronalen Netzwerks bestimmt wird, das den State-Value abhängig vom Zustand bestimmt.

9. Verfahren nach einem der Ansprüche 1 bis 8, wobei die Vielzahl voneinander unabhängiger künstlicher neuronaler Netzwerke mit einem computerimplementierten Verfahren zum Trainieren der künstlichen neuronalen Netzwerke zur Bestimmung des Advantage in einem Reinforcement Learning trainiert wurden, umfassend:
Bestimmen von digitalen Daten über Zustände, Aktionen und Belohnungen für die Ansteuerung des Aktuators (108) abhängig von dem upper confidence bound über die Verteilung von Advantages, Speichern der Daten in einer Datenbank, Sammeln von digitalen Daten über Zustände, Aktionen und Belohnungen und von digitalen Daten über Target-Advantages für diese Zustände und Aktionen von der Datenbank, Erzeugen eines Trainingsdatensatzes, der diese Daten umfasst, Trainieren der Vielzahl der künstlichen neuronalen Netzwerke zur Bestimmung des Advantage mit dem Trainingsdatensatz in vorgegebenen Wegepunkten, wobei eine Summe über eine Vielzahl upper confidence bounds bestimmt oder approximiert wird (300), wobei eine sequentielle Reihe von Wegepunkten bereitgestellt wird (300), die durch Zustände des Aktuators (108) oder seiner Umgebung definiert sind, wobei in der sequentiellen Reihe unmittelbar aufeinanderfolgende Wegepunkte in einer geraden Linie anfahrbar sind, und wobei für die Reihe von Wegepunkten die Zustände bereitgestellt werden (300), deren upper confidence bound die Summe maximieren.

10. Vorrichtung (102) zur automatisierten Beeinflussung eines Aktuators (108), **dadurch gekennzeichnet, dass** die Vorrichtung (102) einen Prozessor (500), insbesondere einer Grafikkarte, und einen Speicher (502) für eine Vielzahl künstlicher neuronaler Netzwerke umfasst, die ausgebildet sind das Verfahren nach einem der Ansprüche 1 bis 8 auszuführen.

11. Computerprogramm, **dadurch gekennzeichnet, dass** das Computerprogramm computerlesbare Instruktionen umfasst, bei deren Ausführen auf einem Computer ein Verfahren nach einem der Ansprüche 1 bis 9 abläuft.

12. Computerprogrammprodukt, **gekennzeichnet durch** ein maschinenlesbares Speichermedium, auf dem das Computerprogramm nach Anspruch 11 gespeichert ist.

## Claims

1. Method for influencing in an automated manner an actuator (108), in particular of a robot, a machine, an at least partially autonomous vehicle, a tool or a part thereof, wherein at least one state of the actuator (108) or an environment of the actuator (108) is provided (300) by an exploration strategy for learning a policy, wherein an action for influencing in an automated manner the actuator (108) is defined (308) by the policy depending on the state, wherein a state value is defined as an expected value for a sum of rewards which are achieved when the policy is followed starting from the state, wherein a state action value is defined as an expected value for a sum of rewards which are achieved when an arbitrary action is initially executed in the state and then the policy is executed, wherein an advantage is defined depending on a difference between the state value and the state action, **characterized in that**, depending on the action and the state, a large number of advantages are defined by a large number of mutually independent artificial neural networks, wherein the large number of mutually independent artificial neural networks are designed to provide one advantage of the large number of advantages each, wherein the policy for the state defines the action which maximizes an empirical mean value over a distribution of the large number of advantages, wherein the exploration strategy specifies at least one state which locally maximizes an upper confidence bound, wherein the upper confidence bound is defined depending on an empirical mean value and a variance over the distribution of the large number of advantages.

2. Method according to Claim 1, **characterized in that** a sequential series of waypoints is provided (300) by the exploration strategy for influencing in an automated manner the actuator (108), the waypoints being defined by states ($s_h$) of the actuator (108) or its environment.

3. Method according to Claim 2, **characterized in that** the actuator (108) is moved (302) towards a waypoint, wherein the action (a) for this waypoint is determined (308) or executed (310) when the waypoint is reached.

4. Method according to Claim 2 or 3, **characterized in that** a check is made (304) as to whether a collision has occurred between the actuator (108) and an obstacle in the environment of the actuator (108) during the movement from one waypoint to the next waypoint in the series, wherein the movement to the next waypoint is interrupted if it is identified the collision has taken place, and wherein, instead of the movement to the next waypoint, a movement to a waypoint which is next in the series, in particular the immediately following waypoint, is initiated.

5. Method according to one of Claims 2 to 4, **characterized in that** a check is made (306) as to whether the next waypoint can be reached during the movement from one waypoint to a next waypoint in the series, wherein the movement to the next waypoint is interrupted if it is established that the next waypoint is unreachable, and wherein, instead of the movement to the next waypoint, a movement to a waypoint following the next waypoint in the series is initiated.

6. Method according to one of Claims 2 to 5, **characterized in that** a sum is determined or approximated (300) over a large number of upper confidence bounds, wherein the states of which the upper confidence bounds maximize the sum are provided (300) for the series of waypoints.

7. Method according to one of the preceding claims, **characterized in that** the distribution over the large number of advantages is determined (400) depending on the action and the state, wherein the upper confidence bound is determined (400) depending on the empirical mean value and the variance over the distribution of the large number of advantages.

8. Method according to Claim 7, **characterized in that** a target advantage for the advantage and a target state value for the state value are provided (404), wherein a gradient descent method is executed (406), with which at least one parameter of an artificial neural network which determines the advantage depending on the action and the state is determined depending on the target advantage and the advantage, and/or with which at least one parameter of an artificial neural network which determines the state value depending on the state is determined depending on the target state value and the state value.

9. Method according to one of Claims 1 to 8, wherein the large number of mutually independent artificial neural networks have been trained with a computerimplemented method for training the artificial neural networks for determining the advantage in a reinforcement learning operation, comprising:

determining digital data about states, actions and rewards for driving the actuator (108) depending on the upper confidence bound over the distribution of advantages,
storing the data in a database, collecting digital data about states, actions and rewards and digital data about target advantages for these states and actions from the database, creating a training data set which comprises this data, training the large number of artificial neural networks for determining the advantage with the training data set at specified waypoints, wherein a sum is determined or approximated (300) over a large number of upper confidence bounds, wherein a sequential series of waypoints which are defined by states of the actuator (108) or its environment is provided (300), wherein waypoints which directly follow one another in the sequential series can be approached in a straight line, and wherein the states of which the upper confidence bounds maximise the sum are provided (300) for the series of waypoints.

10. Device (102) for influencing in an automated manner an actuator (108), **characterized in that** the device (102) comprises a processor (500), in particular a graphics card, and a memory (502) for a large number of artificial neural networks which are designed to execute the method according to one of Claims 1 to 8.

11. Computer program, **characterized in that** the computer program comprises computer-readable instructions, a method according to one of Claims 1 to 9 being run when said instructions are executed on a computer.

12. Computer program product, **characterized by** a machine-readable storage medium on which the computer program according to Claim 11 is stored.


**Revendications**

1. Procédé permettant d'influencer de manière automatisée un actionneur (108), en particulier un robot, une machine, un véhicule au moins partiellement autonome, un outil ou une partie de celui-ci, dans lequel au moins un état de l'actionneur (108) ou d'un environnement de l'actionneur (108) est fourni par une stratégie d'exploration permettant d'apprendre une politique (300), une action servant à influencer de manière automatisée l'actionneur (108) étant définie (308) par la politique en fonction de l'état, une valeur d'état étant définie comme une valeur attendue pour une somme de récompenses qui sont obtenues si la politique est suivie en partant de l'état, une valeur d'action d'état étant définie comme une valeur attendue pour une somme de récompenses qui sont obtenues si dans l'état d'abord une action quelconque est effectuée et ensuite la politique est effectuée, un avantage étant défini en fonction d'une différence entre la valeur d'état et la valeur d'action d'état, **caractérisé en ce qu'**en fonction de l'action et de l'état, une pluralité d'avantages est définie par une pluralité de réseaux neuronaux artificiels, indépendants les uns des autres, la pluralité de réseaux neuronaux artificiels, indépendants les uns des autres, étant réalisée pour fournir respectivement un avantage parmi la pluralité d'avantages, dans lequel la politique définit pour l'état l'action qui maximise une moyenne empirique sur une distribution de la pluralité d'avantages, la stratégie d'exploration spécifiant au moins un état qui maximise localement une limite de confiance supérieure, la limite de confiance supérieure étant définie en fonction d'une moyenne empirique et d'une variance sur la distribution de la pluralité d'avantages.

2. Procédé selon la revendication 1, **caractérisé en ce que** la stratégie d'exploration fournit pour l'influence automatisée de l'actionneur (108) une série séquentielle de points de cheminement (300) qui sont définis par des états ($s_h$) de l'actionneur (108) ou de son environnement.

3. Procédé selon la revendication 2, **caractérisé en ce que** l'actionneur (108) est déplacé jusqu'à un point de cheminement (302), l'action (a) étant déterminée (308) ou exécutée (310) pour ce point de cheminement lorsque le point de cheminement est atteint.

4. Procédé selon la revendication 2 ou 3, **caractérisé en ce que** l'on vérifie (304) si lors du déplacement d'un point de cheminement à un point de cheminement le plus proche dans la série, une collision de l'actionneur (108) avec un obstacle dans l'environnement de l'actionneur (108) survient, le déplacement jusqu'au point de cheminement le plus proche étant abandonné lorsqu'il est reconnu que la collision est présente, et dans lequel, au lieu du déplacement jusqu'au point de cheminement le plus proche, un déplacement vers un point de cheminement suivant, en particulier directement, le point de cheminement le plus proche dans la série est initié.

5. Procédé selon l'une quelconque des revendications 2 à 4, **caractérisé en ce que** l'on vérifie (306) si lors du déplacement d'un point de cheminement à un point de cheminement le plus proche dans la série, le point de cheminement le plus proche peut être atteint, dans lequel le mouvement jusqu'au point de cheminement le plus proche est abandonné s'il est constaté que le point de cheminement le plus proche ne peut pas être atteint, et dans lequel, au lieu du déplacement jusqu'au point de cheminement le plus proche, un déplacement vers un point de cheminement suivant, en particulier directement, le point de cheminement le plus proche dans la série est initié.

6. Procédé selon l'une quelconque des revendications 2 à 5, **caractérisé en ce qu'**une somme pour une pluralité de limites de confiance supérieures est déterminée ou approchée (300), dans lequel, pour la série de points de cheminement, les états dont les limites de confiance supérieures maximisent la somme sont fournis (300).

7. Procédé selon l'une quelconque des revendications précédentes, **caractérisé en ce que** la distribution sur la pluralité d'avantages est déterminée (400) en fonction de l'action et de l'état, la limite de confiance supérieure étant déterminée

13

(400) en fonction de la moyenne empirique et de la variance sur la distribution de la pluralité d'avantages.

8. Procédé selon la revendication 7, **caractérisé en ce qu'**un avantage cible est fourni (404) pour l'avantage et une valeur d'état cible est fournie pour la valeur d'état, un procédé de descente de gradient étant effectué (406) par lequel au moins un paramètre d'un réseau neuronal artificiel est déterminé en fonction de l'avantage cible et de l'avantage, ledit réseau déterminant l'avantage en fonction de l'action et de l'état, et/ou par lequel au moins un paramètre d'un réseau neuronal artificiel est déterminé en fonction de la valeur d'état cible et de la valeur d'état, ledit réseau déterminant la valeur d'état en fonction de l'état.

9. Procédé selon l'une quelconque des revendications 1 à 8, dans lequel la pluralité de réseaux neuronaux artificiels, indépendants les uns des autres, a été entraînée par un procédé mis en œuvre par ordinateur permettant d'entraîner les réseaux neuronaux artificiels afin de déterminer l'avantage au cours d'un apprentissage par renforcement, comprenant les étapes consistant à :

déterminer des données numériques concernant des états, des actions et des récompenses pour le pilotage de l'actionneur (108) en fonction de la limite de confiance supérieure pour la distribution des avantages, stocker les données dans une base de données, collecter des données numériques concernant des états, des actions et des récompenses et des données numériques concernant des avantages cibles pour ces états et ces actions de la base de données, générer un enregistrement d'entraînement qui comprend ces données, entraîner la pluralité des réseaux neuronaux artificiels pour déterminer l'avantage à l'aide de l'enregistrement d'entraînement en des points de cheminement prédéfinis, une somme d'une pluralité de limites de confiance supérieures étant déterminée ou approchée (300), une série séquentielle de points de cheminement étant fournie (300) qui sont définis par des états de l'actionneur (108) ou de son environnement, dans lequel, dans la série séquentielle, des points de cheminement directement consécutifs peuvent être approchés en ligne droite, et dans lequel, pour la série de points de cheminement, les états dont les limites de confiance supérieures maximisent la somme sont fournis (300).

10. Dispositif (102) permettant d'influencer de manière automatisée un actionneur (108), **caractérisé en ce que** le dispositif (102) comprend un processeur (500), en particulier une carte graphique, et une mémoire (502) pour une pluralité de réseaux neuronaux artificiels qui sont réalisés pour effectuer le procédé selon l'une quelconque des revendications 1 à 8.

11. Programme informatique, **caractérisé en ce que** le programme informatique comprend des instructions lisibles par ordinateur lors de l'exécution desquelles sur un ordinateur, un procédé selon l'une quelconque des revendications 1 à 9 est exécuté.

12. Produit de programme informatique, **caractérisé par** un support de stockage lisible par machine sur lequel est stocké le programme informatique selon la revendication 11.

Fig. 1

EP 3 741 518 B1

Fig. 2

$V^\pi(s_t)$

$\mu_A(s_t,a_t)$
$\sigma^2_A(s_t,a_t)$

$A_k^\pi(s_t,a_t)$

102

202 204

212

206-1 210-1 208-1

206-2 210-2 208-2

206-K 210-K 208-K

$s_t$

$a_t$

Fig. 3

EP 3 741 518 B1

```
                    ┌─────────────┐
                    │    Start    │
                    └──────┬──────┘
                           │
                           ▼
                    ┌─────────────┐
        ┌───────────│             │──── 400
        │           └──────┬──────┘
        │                  │
        │                  ▼
        │              ◇───────◇
        │             ╱         ╲────────┐
        │             ╲         ╱        │
        │              ◇───────◇         │
        │                 402            ▼
        │                         ┌─────────────┐
        │                         │             │──── 404
        │                         └──────┬──────┘
        │                                │
        │                                ▼
        │                         ┌─────────────┐
        │                         │             │──── 406
        │                         └──────┬──────┘
        │                                │
        │                                ▼
        │                            ◇───────◇
        └────────────────────────────╲       ╱────────┐
                                      ╱       ╲        │
                                      ◇───────◇        │
                                         408           ▼
                                               ┌─────────────┐
                                               │             │──── 410
                                               └──────┬──────┘
                                                      │
                                                      ▼
                                               ┌─────────────┐
                                               │     End     │
                                               └─────────────┘
```

Fig. 4

Fig. 5

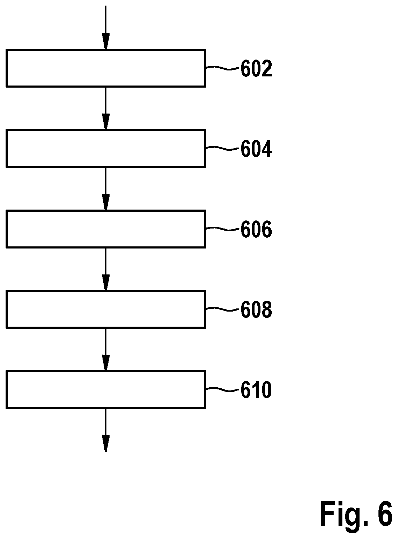

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017228662 A1
- US 2019137954 A1

- US 10207408 B1

**In der Beschreibung aufgeführte Nicht-Patentliteratur**

- **ZIYU WANG et al.** *Dueling Network Architectures for Deep Reinforcement Learning,* 05. April 2016, https://arxiv.org/pdf/ 1511.06581 v3.pdf

- **POWELL M. J. D.** An efficient method for finding the minimum of a function of several variables without calculating derivatives. *The Computer Journal,* 1964, vol. 7 (2), 155-162